# FASCICULE DE BREVET EUROPEEN

(11) **EP 1 101 633 B1**
(45) Date de publication et mention de la délivrance du brevet: **01.02.2006**
(21) Numéro de dépôt: 00124621.4
(22) Date de dépôt: 10.11.2000
(51) Int. Cl.: B60C 15/00, B60C 9/14, B60C 13/00, B60C 9/22

(54) **Pneumatique avec zone basse découplée**
Lufftreifen mit entkoppelter niedriger Zone
Tire with decoupled low zone

(30) Priorité: 18.11.1999 FR 9914620
(43) Date de publication de la demande: 23.05.2001
(73) Titulaire: Société de Technologie Michelin, 63000 Clermont-Ferrand Cedex 09 (FR); MICHELIN RECHERCHE ET TECHNIQUE S.A., 1763 Granges-Paccot (CH)
(72) Inventeur: Costa Pereira, Pedro, 63000 Clermont-Ferrand (FR); Colas Des Francs, Gilles, 63000 Clermont-Ferrand (FR); Denoueix, Jean-Yves, 63112 Blanzat (FR); Guerinon, Bernard, 63100 Clermont-Ferrand (FR); Prost, Pascal, 63200 Riom (FR); Vallee, Alain, 63118 Cebazat (FR)
(74) Mandataire: Dequire, Philippe Jean-Marie Denis

(56) Documents cités:
- EP-A- 0 595 653
- EP-A- 0 638 445
- EP-A- 0 869 015
- US-A- 5 660 656

## Description

La présente invention concerne les pneumatiques. Plus particulièrement, elle concerne une structure de renfort comportant une portion imbriquée, dans laquelle le profil radial du pneumatique comporte un seul agencement de fils de renfort, et une portion découplée, dans laquelle le profil radial du pneumatique comporte au moins deux agencements de fils de renfort.

Le renforcement de carcasse des pneumatiques est à l'heure actuelle constitué par une ou plusieurs nappes, le plus souvent radiales, dont au moins une est retournée autour d'une tringle disposée dans les bourrelets. Les bourrelets constituent le moyen permettant de fixer le pneumatique sur la jante. La rigidité du bourrelet ainsi constitué ainsi que la portion adjacente du flanc est très grande.

Pour optimiser le fonctionnement ainsi que les caractéristiques latérales, longitudinales, en dérive ou en carrossage, etc, il peut s'avérer souhaitable de pouvoir affiner certains papramètres tels la rigidité, la résistance aux impacts, etc. Par ailleurs, afin de faciliter l'automatisation de certaines étapes du procédé de fabrication des pneumatiques, il peut s'avérer avantageux de revoir la nature et/ou la disposition de certains des éléments constituants.

Dans la technique actuelle, il est assez difficile d'assurer une modulation des caractéristiques du flanc et/ou du sommet et/ou du bourrelet. Le flanc doit présenter une souplesse importante, et le bourrelet doit au contraire présenter une importante rigidité. Par ailleurs, les renforts que l'on dispose dans cette partie du pneumatique présentent toujours inévitablement une discontinuité: au niveau de l'extrémité radialement supérieure du retournement de carcasse, on passe sans transition dans une zone dépourvue de ce retournement de carcasse, zone qui est donc inévitablement moins rigide. Une telle discontinuité peut éventuellement modifier le comportement du pneumatique, notamment lors d'un effort latéral. Par ailleurs, cette discontinuité constitue un point singulier qui peut pénaliser l'endurance du pneumatique.

La carcasse traditionnellement utilisée est par ailleurs imprégnée dans une couche de mélange à bas module, la pose se faisant alors sous la forme de l'application d'une nappe carcasse. Il y a donc forcément une couche de mélange à bas module en contact avec les fils de renfort de la carcasse.

Pour rappel, "radialement vers le haut", ou "radialement supérieur" signifie vers les plus grands rayons.

Dans le cas des carcasses radiales, on connaît déjà d'autres principes de conception qui permettent d'éviter les retournements autour d'une tringle. A titre d'exemple, on peut citer le brevet US 3 072 171, dans lequel on proposait de supprimer le retournement des nappes de carcasse, et de disposer des fils orientés circonférentiellement. Dans la structure connue, il est cependant difficile d'assurer un ancrage suffisamment résistant des fils de carcasse aux fils orientés circonférentiellement, ce qui fait que cette proposition n'a jamais connu d'application réelle.

Le document US 5,660,656 décrit encore un pneumatique comportant une structure de renfort de type carcasse constituée d'une portion dans laquelle on trouve un seul agencement de fils de renfort, et d'une portion découplée, dans laquelle on trouve au moins deux agencements de fils de renfort.

Le document EP 0 869 015 décrit quant à lui un pneumatique dans lequel les gommes de liaison entre la structure de carcasse et la couche de renforcement de sommet radialement la plus proche de la structure de carcasse sont constituées par une couche unique de mélange caoutchoutique, notamment en vue de modifier les propriétés de rigidité du sommet du pneumatique.

Un premier but de l'invention est de pallier ces différents inconvénients.

Un autre but de l'invention est de proposer un type d'agencements des différents éléments constituants d'un pneumatique afin de pouvoir affiner certaines caractéristiques, notamment au niveau du flanc et/ou du sommet du pneumatique, comme par exemple les rigidités radiales, latérales, et longitudinales, de préférence en diminuant la masse.

Un autre but poursuivi par l'invention est de proposer une structure de renforcement pour pneumatique qui se prêté aisément à une fabrication mécanisée.

Un autre but poursuivi par l'invention est de proposer une structure de renforcement pour pneumatique qui prend en compte les différents efforts mécaniques en présence dans les différentes zones du pneumatique lors du fonctionnement, notamment à pression nominale.

Pour ce faire, l'invention prévoit un pneumatique comportant au moins une structure de renfort de type carcasse ancrée de chaque côté du pneumatique dans un bourrelet dont la base est destinée à être montée sur un siège de jante, chaque bourrelet se prolongeant radialement vers l'extérieur par un flanc, les flancs rejoignant radialement vers l'extérieur une bande de roulement, la structure de renfort s'étendant circonférentiellement depuis le bourrelet vers ledit flanc, ladite structure de renfort comportant une portion imbriquée, dans laquelle le profil radial du pneumatique comporte un seul agencement de fils de renfort, et une portion découplée, dans laquelle le profil radial du pneumatique comporte au moins deux agencements de fils de renfort, la longueur de la portion découplée de structure de renfort hors de la zone d'ancrage dans le bourrelet étant inférieure à 90 %, et de préférence à 70 %, de la longueur totale des portions imbriquée et découplée de la structure de renfort hors de ladite zone d'ancrage dans le bourrelet.

Selon le type de pneumatique fabriqué et donc en fonction des différentes contraintes qu'il devra subir en utilisation, on positionne le point de transion entre les portions imbriquées et découplées à une position radiale différente. De cette façon, on agit notamment sur la rigidité du pneumatique.

Le pneumatique selon l'invention est léger et facile à fabriquer. En effet, la présence d'une portion imbriquée, avec de préférence une seule structure de renfort, permet d'alléger la structure.

De manière avantageuse, au moins un mélange de gomme à haut module et éventuellement un mélange de gomme à plus faible module sont disposés dans la portion découplée, entre les fils de renfort. Le module dudit mélange à haut module est de préférence compris entre 10 et 60 Mpa et le module dudit mélange à plus faible module est de préférence compris entre 2 et 10 Mpa. La présence de ce mélange peut permettre de maximiser la rigidité tout en conservant une bonne endurance de la structure. De manière préférentielle, le mélange bas module est disposé radialement à l'extérieur.

Selon une variante avantageuse, lesdits mélanges disposés dans la portion découplée, entre les fils de renfort, sont en contact direct avec au moins une portion de ladite structure de renfort.

Ce contact direct améliore les propriétés mécaniques conférées par le mélange. Ce contact se prolonge avantageusement sur toute la longueur occupée par le mélange, et de préférence de chaque côté du mélange.

Le sommet comporte avantageusement une série de fils disposés sensiblement à zéro degré. Dans un tel cas, la structure de renfort et les fils disposés sensiblement à zéro degré sont de préférence séparés uniquement par une seule couche de mélange.

Selon une variante avantageuse, le sommet comporte au moins une nappe sommet de type textile. La structure de renfort et ladite nappe sommet sont alors avantageusement séparées uniquement par une seule couche de mélange.

Le contact direct contribue à améliorer les propriétés mécaniques conférées par le mélange.

Selon une autre variante avantageuse, la portion découplée de la structure de renfort comporte une faible densité de fils.

La zone découplée est avantageusement utilisée pour aménager plus d'espace entre les différents éléments, notamment les fils de la structure de renfort. La densité résultante est donc avantageusement faible. Cela peut contribuer par exemple à conserver une certaine souplesse dans cette portion du pneumatique.

Par ailleurs, la densité de fils de chacun des éléments de la portion découplée de la structure de renfort est avantageusement différente. Par exemple, la densité de l'élément axialement externe est supérieure à la densité de l'élément axialement interne.

Dans le présent mémoire, le terme "fil" désigne en toute généralité aussi bien des monofilaments que des multifilaments, ou des assemblages comme des câbles, des retors ou bien encore n'importe quel type d'assemblage équivalant, et ceci, quels que soient la matière et le traitement de ces fils, par exemple traitement de surface ou enrobage ou préencollage pour favoriser l'adhésion sur le caoutchouc.

Une structure de renfort de type carcasse sera dite radiale lorsque ses fils sont disposés à 90°, mais aussi, selon la terminologie en usage, à un angle proche de 90°.

On sait que dans la technique actuelle, la ou les nappes de carcasse sont retournées autour d'une tringle. La tringle remplit alors une fonction d'ancrage de carcasse, c'est à dire reprend la tension se développant dans les fils de carcasse sous l'effet de la pression de gonflage. Dans les configurations décrites dans la présente demande, la fonction d'ancrage de la structure de renfort de type carcasse est également assurée.

On sait aussi que, toujours dans l'état de la technique, la même tringle assure en outre une fonction de serrage du bourrelet sur sa jante. Dans les configurations décrites dans la présente demande, la fonction de serrage est également assurée, notamment par les enroulements de fils circonférentiels.

Il va sans dire que l'invention peut être utilisée en adjoignant au bourrelet ou à la zone basse du pneumatique en général d'autres éléments, tels des agencements circonférentiels de fils de protection, avantageusement de type textile. Ces fils sont avantageusement disposés sur un ou plus des côtés de la structure de renfort, ou encore entre des éléments d'une portion découplée de la structure de renfort.

Tous les détails de réalisation sont donnés dans la description qui suit, complétée par les figures 1 à 4 où:
la figure 1 est une coupe radiale montrant deux demi-portions de pneumatiques, avec, dans la partie droite, le sommet, le flanc et le bourrelet d'une première forme d'exécution d'un pneumatique selon l'invention, et dans la portion de gauche, une coupe similaire d'un autre exemple de forme et de dimensions différentes avec une indication des longueurs respectives des différentes zones de la structure de renfort selon l'invention;
la figure 2 est une coupe radiale montrant le sommet, le flanc et le bourrelet d'une variante de la forme d'exécution de la figure 1;
la figure 3 est une coupe radiale montrant le sommet, le flanc et le bourrelet d'une autre variante de la forme d'exécution de la figure 1;
la figure 4 est une coupe radiale montrant le sommet, le flanc et le bourrelet d'une autre variante de la forme d'exécution de la figure 1.

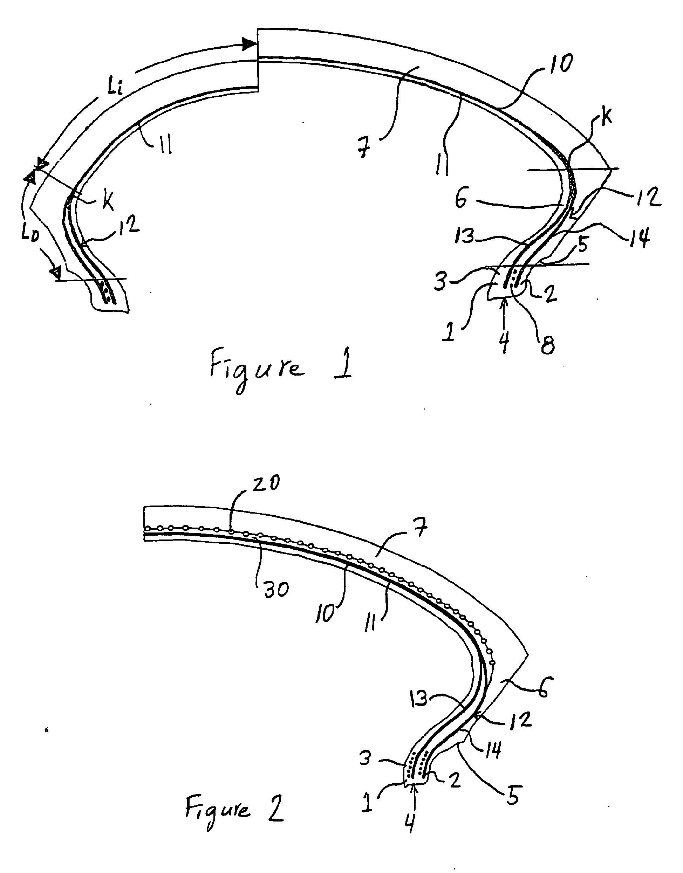

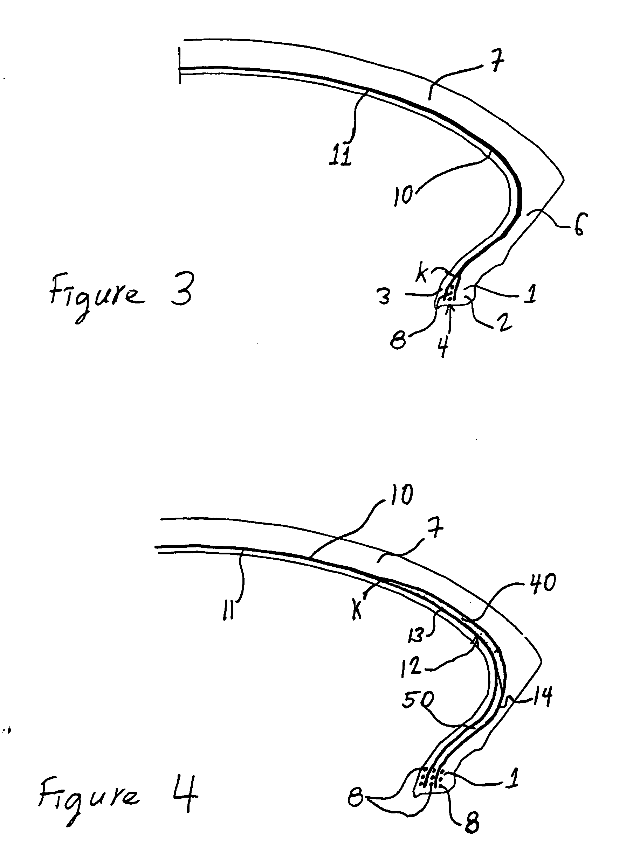

La figure 1 illustre un pneumatique avec les éléments constituants de la zone basse, notamment le bourrelet 1 d'une première forme d'exécution du pneumatique selon l'invention. Le bourrelet 1 comporte une portion axialement externe 2 prévue et conformée de façon à être placée contre le rebord d'une jante. La portion supérieure, ou radialement externe de la portion 2 forme une portion adaptée 5 au crochet de jante. Cette portion est souvent incurvée axialement vers l'extérieur, tel qu'illustré aux figures 1 et 2. La portion 2 se termine radialement et axialement vers l'intérieur par un siège de bourrelet 4, adapté pour être disposé contre un siège de jante. Le bourrelet comporte également une portion axialement interne 3, s'étendant sensiblement radialement depuis le siège 4 vers le flanc 6.

Le pneumatique comporte également une structure de renfort 10 de type carcasse pourvue de renforts avantageusement configurés selon un agencement sensiblement radial. Cette structure peut être agencée de façon continue d'un bourrelet à l'autre, en passant par les flancs et le sommet du pneumatique, ou encore, elle peut comporter deux ou plusieurs parties, agencées par exemple le long des flancs, sans couvrir la totalité du sommet.

Afin de positionner les fils de renforcement de façon aussi précise que possible, il est très avantageux de confectionner le pneumatique sur support rigide, par exemple un noyau rigide imposant la forme de sa cavité intérieure. On applique sur ce noyau, dans l'ordre requis par l'architecture finale, tous les constituants du pneumatique, qui sont disposé directement à leur place finale, sans que le profil du pneumatique doive être modifié lors de la confection.

Des fils de renfort ou de renforcement circonférentiels 8 agencés de préférence sous forme de piles, sont prévus dans chacun des bourrelets. Le fil employé pour les piles de fil orientées circonférentiellement est de préférence du fil métallique. Dans chaque pile, les fils sont avantageusement sensiblement concentriques et superposés.

Quant à la manière d'obtenir lesdites piles de fil, on peut superposer des anneaux de diamètre progressivement croissant, ou bien on peut par exemple bobiner plusieurs tours de fil. Il n'est pas nécessaire d'ajouter un mélange de caoutchouc pour assurer l'imprégnation du fil de renfort, ou des enroulements circonférentiels de fil.

Afin d'assurer un parfait ancrage d'une carcasse, on réalise un bourrelet composite stratifié. A l'intérieur du bourrelet 1, entre les alignements de fil de la structure de renfort, on dispose les fils orientés circonférentiellement. Ceux-ci sont disposés en une pile comme sur les figures, ou en plusieurs piles adjacentes, ou en paquets, ou en toute disposition judicieuse, selon le type de pneumatique et/ou les caractéristiques recherchées.

Les portions d'extrémité radialement internes de la structure de renfort 10 coopèrent avec les bourrelets. Il se crée ainsi un ancrage de ces portions dans lesdits bourrelets de manière à assurer l'intégrité du pneumatique. Afin de favoriser cet ancrage, l'espace entre les fils circonférentiels et la structure de renfort est occupé par un mélange de gomme de liaison. On peut également prévoir l'utilisation de plusieurs mélanges ayant des caractéristiques différentes, délimitant plusieurs zones, les combinaisons de mélanges et les agencements résultants étant quasi-illimités. Il est toutefois avantageux de prévoir la présence d'un mélange de gomme à haut module d'élasticité dans la zone d'intersection entre l'arrangement de fils et la structure de renfort.

La structure illustrée à la figure 1 est particulièrement simplifiée, simple à réaliser et de faible masse. Les efforts de la structure de renfort sont transmis aux enroulements à zéro degré par l'intermédiaire d'un mélange aux caractéristiques adaptées.

Tel qu'on peut le voir sur la portion de droite de la figure 1, la structure de renfort 10 comporte une portion imbriquée 11, ou monocouche, disposée dans la région du sommet 7 et/ou du flanc du pneumatique. Elle comporte par ailleurs une portion découplée 12, ou bi-couche, ou séparée, se prolongeant radialement vers l'extérieur depuis le dessus du bourrelet 1 vers un point de transition K situé soit au niveau du flanc 6 ou au niveau du sommet 7. La portion imbriquée 11 présente l'avantage de la compacité, permettant de réaliser un profil de faible épaisseur. La portion découplée 12 permet de moduler les propriétés du pneumatique en fonction de la zone où on se situe, en permettant par exemple de proposer des architectures plus ou moins rigide. En ajoutant à cela la possibilité de disposer différents types de mélanges par exemple entre les couches de la portion découplée, on peut encore affiner les caractéristiques en fonction de l'usage prévu pour le pneumatique.

Dans l'exemple illustré à la figure 1, le point de transition k se situe dans la région radialement externe du flanc. Radialement intérieurement par rapport à ce point, on retrouve la portion découplée 12 ou bi-couche ou duo. Cette portion comprend un élément de structure de renfort axialement interne 13 ou couche interne et un élément de structure de renfort axialement externe 14 ou couche externe.

Tel qu'illustré sur la portion de gauche de la figure 1, la portion imbriquée 11 est de longueur Li, soit depuis la portion axialement médiane du pneumatique, vers le point de transition k. La portion découplée 12 est de longueur Ld, soit depuis le point de transition k vers le bas ou la portion radialement interne du pneumatique, jusqu'à une position immédiatement adjacente au bourrelet ou à la zone d'ancrage de la structure de renfort dans le bourrelet.

La longueur Ld est prévue de façon à ne pas excéder environ 90 %, et de préférence 70 % des longueurs totales U + Ld. Le point de transition k se situe donc entre une position immédiatement adjacente au bourrelet ou à la zone d'ancrage de la structure de renfort dans le bourrelet, auquel cas la longueur Ld est nulle, et une position où Ld représente 90 % de Ld + Li.

Selon une variante avantageuse, dans laquelle la structure de renfort ne se prolonge pas jusqu'à la portion axialement médiane du pneumatique, la longueur Li est mesurée depuis le point radialement externe de cette structure.

Selon une variante avantageuse, une zone tampon est prévue entre l'extrémité radialement externe du bourrelet ou de la zone d'ancrage de la structure de renfort dans le bourrelet et le début de la portion découplée 12. Cette zone intermédiaire sert en quelque sorte de zone de transition entre la zone d'ancrage et la zone découplée 12. Dans un tel cas, la limite radialement interne de la longueur Ld se situe au niveau de la portion radialement externe de la zone de transition. La zone de transition peut occuper une zone équivalente à une, deux, voire même trois fois la hauteur, ou espace radial, occupé par la zone d'ancrage.

La figure 2 illustre une variante de la forme d'exécution de la figure 1, dans laquelle le point de transition k se situe sensiblement au niveau de l'intersection entre le flanc 6 et le sommet 7. Le sommet comporte par ailleurs des alignements circonférentiels de fils 20 disposés sensiblement à zéro degré. De manière avantageuse, ces fils sont de préférence disposés directement sur le mélange appliqué sur la structure de renfort 10, préalablement appliquée telle quelle, c'est-à-dire sans être imprégnée dans une couche de mélange comme c'est habituellement le cas lors de la fabrication de pneumatiques. De cette façon, il n'y a qu'une seule couche de mélange entre la structure de renfort 10 et les fils 20. Les interactions mécaniques entre les différents éléments sont ainsi optimisées.

La figure 3 illustre un autre exemple de réalisation, où la longueur Ld est nulle. Le point de transition k se situe donc immédiatement contre la zone d'ancrage de la structure de renfort 10 dans le bourrelet 1. La structure de renfort est double ou bi-couche uniquement dans la zone d'ancrage de celle-ci dans le bourrelet, avec l'interposition de fils de renfort 8 disposés en une ou plusieurs piles ou autrement, selon le cas. Cet exemple de réalisation est avantageusement utilisé pour obtenir des flancs relativement souples.

La figure 4 illustre une autre variante dans laquelle le point de transition k se situe dans le sommet 7 et est positionné de sorte que la longueur Ld équivaut sensiblement à 70 % de la longueur totale de Li + Ld.

Par ailleurs, la zone située entre les éléments de structure de renfort 13 et 14, est occupée d'une part par un mélange à haut module 40 disposé dans la portion radialement externe, et d'autre part par un mélange à plus faible module 50, disposé dans la portion radialement interne. Le mélange 40 comporte de préférence un module situé entre 15 et 60 Mpa, tandis que le mélange 50 comporte un module avantageusement compris entre 2 et 15 Mpa.

Ces mélanges 40 et 50 sont avantageusement disposés de façon à être en contact direct avec les portions adjacentes de la structure de renfort 10. Dans les configurations traditionnelles, une nappe carcasse (fil imprégné dans une couche de mélange caoutchoutique) est appliquée. Il en résulte donc une mince couche intermédiaire de gomme à plus faible module qui se trouve entre la zone de mélange à haut module et la portion de structure de renfort. Avec le contact direct, donc sans la présence de cette couche mince de mélange à plus faible module, l'impact de la présence du mélange à haut module dans la zone est amplifié. En effet, la traditionnelle couche mince à plus faible module engendre des pertes d'énergies, qui peuvent occasionner une détérioration des propriétés mécaniques.

De plus, en modifiant l'épaisseur de la zone 40 et/ou de la zone 50 et/ou en utilisant un mélange avec un module plus ou moins élevé, on peut obtenir un pneumatique avec la rigidité souhaitée, adaptée pour un usage bien spécifique.

Les positions et/ou les proportions respectives de chacun de ces mélanges ainsi que le nombre de zones différentes pourraient bien entendu différer dans d'autres exemples où les propriétés recherchées ne sont pas les mêmes.

Par ailleurs, les fils 8 ainsi que la portion sensiblement adjacente de la structure de renfort 10 sont avantageusement disposés dans une zone de gomme à haut module, par exemple supérieure à 20 Mpa. Une telle zone favorise l'ancrage dans le bourrelet de la structure de renfort.

Ces différents exemples de réalisation sont bien adaptés notamment pour les pneumatiques pour véhicules à indice de vitesse élevée de type tourisme ou deux roues.

## Revendications

1. Pneumatique comportant au moins une structure de renfort de type carcasse (10) ancrée de chaque côté du pneumatique dans un bourrelet (1) dont la base est destinée à être montée sur un siège de jante, chaque bourrelet se prolongeant radialement vers l'extérieur par un flanc, les flancs rejoignant radialement vers l'extérieur une bande de roulement, la structure de renfort s'étendant circonférentiellement depuis le bourrelet vers ledit flanc, ladite structure de renfort comportant une portion imbriquée (11), dans laquelle le profil radial du pneumatique comporte un seul agencement de fils de renfort, et une portion découplée (12), dans laquelle le profil radial du pneumatique comporte au moins deux agencements de fils de renfort, **caractérisé en ce que** la longueur de la portion découplée (Ld) de structure de renfort hors de la zone d'ancrage dans le bourrelet étant inférieure à 90 %, et de préférence à 70 %, de la longueur totale des portions imbriquée (Li, Ld) et découplée de la structure de renfort hors de ladite zone d'ancrage dans le bourrelet et **en ce qu'** au moins un mélange de gomme à haut module (40) et un mélange de gomme à plus faible module (50) sont disposés dans la portion découplée, entre les fils de renfort.

2. Pneumatique selon la revendication 1, dans lequel le module dudit mélange à haut module est compris entre 10 et 60 Mpa.

3. Pneumatique selon l'une des revendications 1 ou 2, dans lequel le module dudit mélange à plus faible module est compris entre 2 et 10 Mpa.

4. Pneumatique selon l'une des revendications 1 à 3, dans lequel lesdits mélanges disposés dans la portion découplée, entre les fils de renfort, sont en contact direct avec au moins une portion de ladite structure de renfort.

5. Pneumatique selon l'une des revendications précédentes, dans lequel le sommet comporte une série de fils disposés sensiblement à zéro degré.

6. Pneumatique selon la revendication 5, dans lequel la structure de renfort et les fils disposés sensiblement à zéro degré sont séparés par une seule épaisseur de mélange.

7. Pneumatique selon l'une des revendications précédentes, dans lequel le sommet comporte au moins une nappe sommet de type textile.

8. Pneumatique selon la revendication 7, dans lequel la structure de renfort et ladite nappe sommet sont séparées par une seule épaisseur de mélange.

9. Pneumatique selon l'une des revendications précédentes, dans lequel la portion découplée comporte une faible densité de fils.

10. Pneumatique selon l'une des revendications précédentes, comportant au moins un agencement de fils suivant un parcours sensiblement circonférentiel, disposé de façon sensiblement adjacente à ladite structure de renfort au niveau du bourrelet.

11. Pneumatique selon l'une des revendications précédentes, dans lequel la portion imbriquée couvre au moins une portion du sommet du pneumatique.

12. Pneumatique selon l'une des revendications précédentes, comportant une zone tampon entre l'extrémité radialement externe de la zone d'ancrage de la structure de renfort dans le bourrelet et le début de la portion découplée.

13. Pneumatique selon la revendication 12, dans lequel la zone de transition occupe une zone équivalente jusqu'à trois fois l'espace radial occupé par la zone d'ancrage.

## Patentansprüche

1. Luftreifen, der mindestens eine Verstärkungsstruktur vom Karkassentyp (10) aufweist, die auf beiden Seiten des Luftreifens in einem Wulst (1) verankert ist, dessen Basis auf einem Felgensitz montiert werden soll, wobei sich jeder Wulst radial nach außen in eine Flanke erstreckt, die Flanken radial nach außen in einem Laufstreifen zusammenlaufen, sich die Verstärkungsstruktur in Umfangsrichtung vom Wulst zu den Flanken erstreckt und die Verstärkungsstruktur eine eingebettete Zone (11), in der das radiale Profil des Luftreifens nur eine Anordnung von Verstärkungsdrähten aufweist, und eine entkoppelte Zone (12) besitzt, in der das radiale Profil des Luftreifens mindestens zwei Anordnungen von Verstärkungsdrähten aufweist, **dadurch gekennzeichnet, dass** die Länge der entkoppelten Zone Ld der Verstärkungsstruktur außerhalb der Verankerungszone in dem Wulst unter 90% und vorzugsweise unter 70% der Gesamtlänge (Li, Ld) der eingelassenen Zone und entkoppelten Zone der Verstärkungsstruktur außerhalb der Verankerungszone in dem Wulst liegt, und **dadurch**, dass mindestens eine Gummimischung mit hohem Modul (40) und eine Gummimischung mit niedrigerem Modul (50) in der entkoppelten Zone zwischen den Verstärkungsdrähten angebracht ist.

2. Luftreifen nach Anspruch 1, wobei der Modul der Mischung mit hohem Modul im Bereich von 10 bis 60 MPa liegt.

3. Luftreifen nach einem der Ansprüche 1 oder 2, wobei der Modul der Mischung mit niedrigerem Modul im Bereich von 2 bis 10 MPa liegt.

4. Luftreifen nach einem der Ansprüche 1 bis 3, wobei die Mischungen, die in der entkoppelten Zone zwischen den Verstärkungsdrähten angebracht sind, in direktem Kontakt mit mindestens einem Teil der Verstärkungsstruktur sind.

5. Luftreifen nach einem der vorhergehenden Ansprüche, wobei der Scheitel eine Reihe von in etwa mit 0° angeordneten Drähten aufweist.

6. Luftreifen nach Anspruch 5, wobei die Verstärkungsstruktur und die in etwa mit 0° angeordneten Drähte durch nur eine Mischungsstärke getrennt sind.

7. Luftreifen nach einem der vorherigen Ansprüche, wobei der Scheitel mindestens eine Scheitellage vom textilen Typ enthält.

8. Luftreifen nach Anspruch 7, wobei die Verstärkungsstruktur und die Scheitellage durch nur eine Mischungsstärke getrennt sind.

9. Luftreifen nach einem der vorhergehenden Ansprüche, wobei die entkoppelte Zone eine geringe Dichte an Drähten aufweist.

10. Luftreifen nach einem der vorherigen Ansprüche, der mindestens eine Anordnung von Drähten, aufweist, die in etwa in Umfangsrichtung verlaufen und die auf der Höhe des Wulstes in etwa angrenzend an die Verstärkungsstruktur angeordnet ist.

11. Luftreifen nach einem der vorhergehenden Ansprüche, wobei die eingebettete Zone mindestens einen Teil des Scheitels des Luftreifens bedeckt.

12. Luftreifen nach einem der vorhergehenden Ansprüche, der eine Pufferzone zwischen dem radial äußeren Ende der Verankerungszone der Verstärkungsstruktur in dem Wulst und dem Beginn der entkoppelten Zone aufweist.

13. Luftreifen nach Anspruch 12, wobei die Übergangszone einen Bereich einnimmt, der bis zu dem dreifachen radialen Abstand, der von der Verankerungszone eingenommen wird, äquivalent ist.

## Claims

1. A tyre comprising at least one carcass-type reinforcement structure (10) anchored on each side of the tyre in a bead (1) whose base is intended to be fitted on a rim seat, each bead being extended radially towards the outside by a sidewall, the sidewalls meeting up radially towards the outside with a tread, the reinforcement structure extending circumferentially from the bead towards said sidewall, said reinforcement structure comprising an imbricated portion (11), in which the radial profile of the tyre comprises a single arrangement of reinforcement cords, and a decoupled portion (12), in which the radial profile of the tyre comprises at least two arrangements of reinforcement cords, **characterised in that** the length of the decoupled portion (Ld) of the reinforcement structure outside the anchoring zone in the bead is less than 90 %, and preferably less than 70 %, of the total length of the imbricated and decoupled portions (Li, Ld) of the reinforcement structure outside said anchoring zone in the bead and **in that** at least one high modulus rubber mix (40) and one lower modulus rubber mix (50) are disposed in the decoupled portion, between the reinforcement cords.

2. A tyre according to claim 1, in which the modulus of said high modulus mix is between 10 and 60 MPa.

3. A tyre according to one of claims 1 or 2, in which the modulus of said lower modulus mix is preferably between 2 and 10 MPa.

4. A tyre according to one of claims 1 to 3, in which said mixes disposed in the decoupled portion, between the reinforcement cords, are in direct contact with at least a portion of said reinforcement structure.

5. A tyre according to one of the preceding claims, in which the crown comprises a series of cords disposed substantially at zero degrees.

6. A tyre according to claim 5, in which the reinforcement structure and the cords disposed substantially at zero degrees are separated by a single thickness of mix.

7. A tyre according to one of the preceding claims, in which the crown comprises at least one crown ply of textile type.

8. A tyre according to claim 7, in which the reinforcement structure and said crown ply are separated by a single thickness of mix.

9. A tyre according to one of the preceding claims, in which the decoupled portion comprises a low cord density.

10. A tyre according to one of the preceding claims, comprising at least one arrangement of cords following a substantially circumferential course, disposed substantially adjacent to said reinforcement structure at the level of the bead.

11. A tyre according to one of the preceding claims, in which the imbricated portion covers at least a portion of the crown of the tyre.

12. A tyre according to one of the preceding claims, comprising a buffer zone between the radially outer end of the anchoring zone of the reinforcement structure in the bead and the start of the decoupled portion.

13. A tyre according to claim 12, in which the transition zone occupies a zone equivalent to up to three times the radial space occupied by the anchoring zone.
